# DEMANDE DE BREVET EUROPEEN

(11) **EP 2 524 836 A2**
(43) Date de publication de la demande: **21.11.2012**
(21) Numéro de dépôt: 12168201.7
(22) Date de dépôt: 16.05.2012
(51) Int. Cl.: B60L 11/18, B60L 11/16, B60M 1/36, B61C 3/02

(54) **Procédé d'alimentation électrique d'un véhicule ferroviaire, système d'alimentation en station, système de stockage d'énergie embarqué et véhicule ferroviaire associés**

(30) Priorité: 19.05.2011 FR 1154359
(71) Demandeur: ALSTOM Transport SA, 92300 Levallois-Perret (FR)
(72) Inventeur: Chantal, Olivier, 78260 Acheres (FR)
(74) Mandataire: Domenego, Bertrand

(57) **Abrégé**

Procédé d'alimentation électrique d'un véhicule ferroviaire (1) comprenant un système de stockage d'énergie embarqué (7), caractérisé en ce que :
- un convertisseur statique d'énergie fixe (11), localisé au niveau d'une station d'arrêt (10) du véhicule, reçoit de l'énergie électrique ;
- le véhicule ferroviaire étant arrêté en station, un transfert d'énergie à destination du système de stockage d'énergie embarqué (7) est réalisé par le convertisseur statique fixe (11) à partir de ladite énergie électrique reçue, ledit convertisseur statique fixe adaptant la tension fournie (V3) au système de stockage d'énergie embarqué en fonction de l'état de charge dudit système de stockage d'énergie embarqué ;
- le système de stockage d'énergie embarqué (7) se charge en fonction de l'énergie transférée sous la tension (V3) adaptée par le convertisseur statique fixe.

## Description

La présente invention concerne un procédé d'alimentation électrique d'un véhicule ferroviaire comprenant un système de stockage d'énergie embarqué.

Généralement les véhicules électriques de transport public sont alimentés électriquement à l'aide de contacts électriques entre le véhicule et son rail d'alimentation via un patin, ou encore entre le véhicule et sa caténaire via un pantographe, fournissant aux véhicules une alimentation électrique extérieure.

Des véhicules sont en outre adaptés pour cheminer sur au moins une portion du trajet en mode d'alimentation autonome à l'aide d'un système de stockage d'énergie embarqué, sans nécessiter de source d'alimentation électrique extérieure, et donc sans besoin de contacts électriques permanents entre le véhicule et son rail de captage ou sa caténaire.

Ce fonctionnement en mode d'alimentation autonome permet de respecter certaines contraintes esthétiques (préservation du paysage, par exemple à proximité de monuments classés, etc.) ou techniques (par exemple en cas d'interdiction de câbles disposés en hauteur, pour permettre le passage de convois exceptionnels...).

Un tel système d'alimentation embarqué comprend un module de stockage d'énergie (avec par exemple des super-condensateurs et/ou un volant d'inertie et/ou une batterie...) et un convertisseur de tension continu-continu (hacheur) qui permet d'adapter aux contraintes de ce module de stockage les caractéristiques de l'énergie électrique de charge ou décharge fournie.

Le système d'alimentation embarqué permet la réception, l'adaptation et le stockage proprement dit de l'énergie électrique en vue d'alimenter électriquement les divers équipements à bord du véhicule ferroviaire en mode d'alimentation autonome.

Le chargement du module de stockage via le hacheur peut être effectué par récupération d'énergie de freinage, par l'énergie fournie préalablement en roulant en mode d'alimentation extérieure depuis les contacts électriques du pantographe ou des patins, ou encore lors des arrêts en station.

Le document EP 1765631 décrit un tel dispositif d'alimentation comportant un système de stockage d'énergie comprenant un ou plusieurs volants d'inertie, une ou plusieurs batteries de puissance et un ou plusieurs ensembles supercapacitifs.

Généralement le chargement préalable effectué (par exemple par recharge rapide lors d'un arrêt en station) permet au véhicule de réaliser seulement une interstation « facile », c'est à dire assez courte sur un profil peu pentu, en mode autonome (ie le chemin entre deux stations). La raison en est le temps de chargement qui ne peut dépasser le temps d'échange-passagers. Le hacheur embarqué est utilisé aujourd'hui pour les charges du module de stockage tant en station qu'en roulant.

Ce hacheur embarqué est dimensionné pour récupérer en roulant l'énergie de freinage mais il y aurait intérêt , lorsque les capacités de stockage d'énergie disponibles sur le marché augmenteront (ce qui est en train d'arriver),à pouvoir le charger à l'arrêt, dans un temps compatible avec le temps d'échange passagers, avec une énergie plus importante permettant de parcourir des interstations plus longues ou avec des dénivelés plus importants ou bien encore d'alimenter les auxiliaires durant des arrêts prolongés entre deux stations. Or le hacheur embarqué ne permet pas de traiter des puissances transférées très importantes, ce qui limite l'énergie rechargée dans le respect du temps d'arrêt en station autorisé.

Par ailleurs, des contraintes fortes pèsent sur le dimensionnement du système d'alimentation embarqué. En effet, le véhicule devant être accessible aux personnes à mobilité réduite et aux poussettes notamment, les éléments du système d'alimentation doivent être disposés sur le toit du véhicule, occuper un minimum d'espace et respecter une masse raisonnable. Les recharges à l'arrêt importantes évoquées ci-dessus nécessiteraient alors des hacheurs surdimensionnés pour la fonction de récupération d'énergie en roulant et ne seraient plus logeables sur les matériels roulants.

A cet effet, suivant un premier aspect, l'invention a pour objet un procédé d'alimentation du type précité, **caractérisé en ce que** :
- un convertisseur statique d'énergie fixe, localisé au niveau d'une station d'arrêt du véhicule, reçoit de l'énergie électrique ;
- le véhicule ferroviaire étant arrêté en station, un transfert d'énergie à destination du système de stockage d'énergie embarqué est réalisé par le convertisseur statique fixe à partir de ladite énergie électrique reçue, ledit convertisseur statique fixe adaptant la tension fournie au système de stockage d'énergie embarqué en fonction de l'état de charge dudit système de stockage d'énergie embarqué ;
- le système de stockage d'énergie embarqué se charge en fonction de l'énergie transférée sous la tension adaptée par le convertisseur statique fixe.

Un tel procédé d'alimentation permet de recharger électriquement le véhicule en station à l'aide d'un hacheur dimensionné pour permettre ensuite une marche autonome sur:
- une interstation difficile par ses caractéristiques (longueur et pente),
- une interstation rendue difficile par un arrêt prolongé en ligne
- sur plusieurs interstations,

La charge doit toujours avoir lieu en un temps très court (aux environs de 20 secondes) correspondant au temps de montée et descente des passagers en station.

En effet, le hacheur dans un système autonome embarqué peut aujourd'hui transférer une énergie d'environ 300 kW au lieu d'environ 750 kW rendant impossibles les interstations difficiles définies ci-dessus, ce que l'Invention permet. Etant donné les contraintes sur le dimensionnement du véhicule ferroviaire mentionnée plus haut, il n'est pas envisageable d'embarquer un hacheur de plus de 500 kW.

Dans des modes de réalisation, le procédé d'alimentation suivant l'invention comporte en outre une ou plusieurs des caractéristiques suivantes :
- le système de stockage d'énergie embarqué comprend un convertisseur statique d'énergie embarqué et un module de stockage d'énergie, le convertisseur statique d'énergie embarqué étant adapté pour transférer de l'énergie au module de stockage d'énergie en adaptant la tension fournie au module de stockage d'énergie en fonction de l'état de charge dudit module de stockage d'énergie, selon lequel le convertisseur statique d'énergie fixe et le convertisseur statique d'énergie embarqué coopèrent lors d'un transfert d'énergie par le convertisseur statique fixe à destination du système de stockage d'énergie embarqué ;
- lors d'un transfert d'énergie par le convertisseur statique fixe à destination du système de stockage d'énergie embarqué, le convertisseur statique d'énergie embarqué surveille l'état du module de stockage d'énergie, et pilote le fonctionnement du convertisseur statique fixe en fonction dudit état surveillé ;
- le convertisseur statique fixe a pour caractéristique de puissance transférée une valeur comprise entre 500 et 3000 kW ;
- le convertisseur statique d'énergie embarqué a pour caractéristique de puissance transférée une valeur comprise entre 300 et 500 kW ;
- le convertisseur statique fixe et le convertisseur statique d'énergie embarqué comprennent des hacheurs, et selon lequel le module de stockage d'énergie comprend des supercondensateurs ;

Suivant un deuxième aspect, l'invention concerne un système d'alimentation électrique en station destiné à alimenter un véhicule ferroviaire comprenant un système de stockage d'énergie embarqué, ledit système d'alimentation en station comprenant un convertisseur statique d'énergie fixe, localisé au niveau d'une station d'arrêt du véhicule, adapté pour recevoir de l'énergie électrique et pour transférer ladite énergie au système de stockage d'énergie embarqué lors d'un arrêt du véhicule ferroviaire à ladite station, ledit convertisseur statique fixe adaptant la tension fournie au système de stockage d'énergie embarqué en fonction de l'état de charge dudit système de stockage d'énergie embarqué.

Suivant un troisième aspect, l'invention concerne un système de stockage d'énergie embarqué d'un véhicule ferroviaire, comprenant un convertisseur statique d'énergie embarqué et un module de stockage d'énergie, le convertisseur statique d'énergie embarqué étant adapté pour transférer de l'énergie au module de stockage d'énergie en adaptant la tension fournie au module de stockage d'énergie en fonction de l'état de charge dudit module de stockage d'énergie, dans lequel le convertisseur statique d'énergie embarqué est adapté pour coopérer avec un convertisseur statique d'énergie fixe localisé au niveau d'une station d'arrêt du véhicule, lors d'un transfert d'énergie effectué par le convertisseur statique fixe à destination du module de stockage d'énergie embarqué, le système de stockage d'énergie embarqué se chargeant en fonction de l'énergie transférée sous une tension adaptée par le convertisseur statique fixe.

Suivant un quatrième aspect, l'invention concerne un véhicule ferroviaire comprenant un système de stockage d'énergie embarqué suivant le troisième aspect de l'invention.

L'invention sera mieux comprise à la lecture de la description qui suit et à l'examen de la figure qui l'accompagne. Cette figure est donnée à titre illustratif, mais nullement limitatif de l'invention. Ces figures sont les suivantes :

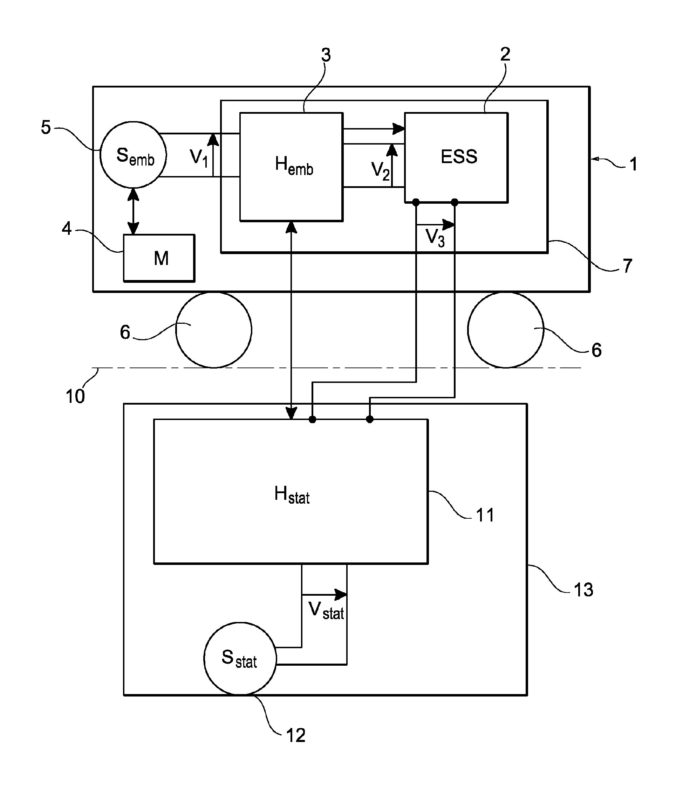

- la figure 1 est une vue schématique d'un véhicule de transport public dans un mode de réalisation de l'invention.

La figure 1 représente schématiquement un véhicule 1 dans un mode de réalisation de l'invention, par exemple un tramway.

Ce tramway 1 est destiné au transport de passagers. Des véhicules intégrant l'invention peuvent être non ferroviaires (bus, trolleys...) ou bien conçus pour le transport de marchandises etc.

Le tramway 1 comporte :
- des éléments de traction comportant notamment au moins un moteur électrique 4 adapté pour générer un couple de traction entraînant des roues 6 du tramway, lorsque ces éléments de traction sont alimentés en énergie électrique ;
- un système d'alimentation embarqué 7 ;
- des équipements auxiliaires, non représentés, tels que des équipements de climatisation, d'éclairage, de chauffage, de gestion d'ouverture/fermeture des portes etc., ne participant pas à la traction du véhicule.

Le système d'alimentation embarqué 7 comporte des moyens de stockage d'énergie électrique 2. Ces moyens de stockage comprennent dans le cas présent un module de supercondensateurs connectés en série ou en parallèle, qu'on repérera par la suite par la référence 2.

Le système d'alimentation embarqué 7 comporte en outre un convertisseur statique d'énergie 3 embarqué, qui comprend dans le cas considéré un hacheur Hemb, qu'on repérera par la suite par la référence 3. Dans le cas considéré, le hacheur Hemb 3 est réversible (ie l'énergie peut transiter dans les deux sens).

En raison des contraintes d'encombrement des tramways, le convertisseur statique 3 et le module de supercondensateurs 2 sont disposés sur le toit du tramway 1.

A titre d'illustration, les caractéristiques du module de supercondensateurs 2 sont, en termes d'énergie transférée de 4 à 20 kWh et en termes de puissance de transfert de 500 à 3000 kW.

A titre d'illustration, les caractéristiques du hacheur 3 sont en termes d'énergie transférée de 300 à 500 kW et dimension d'environ 1,5 mètre cube.

Pour rappel, un super-condensateur est un composant électrostatique de stockage de charges électriques, formé par la création d'une double couche électrochimique. Elle comporte deux électrodes conductrices contenant du charbon actif, séparées par une solution ionique (électrolyte). Des charges électriques s'accumulent à l'interface entre la solution ionique et l'électrode. Les chargements/déchargements des super-condensateurs sont relatifs au déplacement des ions entre des couches de substrat à polarité différente. L'interface entre les charges agit comme un diélectrique. L'énergie stockée est le résultat d'un effet capacitif. Aucune réaction d'oxydoréduction n'est réalisée.

La tension de charge ou de décharge aux bornes du module de supercondensateurs est une tension continue, qui peut varier fortement selon l'état de charge des supercondensateurs, par exemple entre 400 V et 800 V (l'énergie contenue dans le système à supercondensateurs est une fonction du carré de la tension aux bornes du module à supercondensateurs).

Le tramway 1 comporte un dispositif commutateur Semb 5 adapté pour, lorsque le tramway 1 est en mode d'alimentation autonome, fournir aux éléments de traction 4 et équipements auxiliaires l'énergie contenue dans le système d'alimentation embarqué 7.

Le dispositif commutateur Semb 5 est aussi adapté pour, lorsque le tramway 1 est alimenté en roulant par une source extérieure via un pantographe ou un contact au sol, fournir aux éléments de traction 4 et équipements auxiliaires, et éventuellement au système d'alimentation embarqué 7, l'énergie de la source extérieure.

Le dispositif commutateur Semb 5 permet aussi, lorsque le tramway 1 freine, de fournir tout ou partie de l'énergie de freinage récupérée au système de stockage embarqué 7 et/ou fournir tout ou partie de l'énergie de freinage récupérée au réseau extérieur électrique, via un pantographe ou un contact au sol.

Ci-dessous est décrit, dans une première partie, le fonctionnement du tramway lors de son déplacement entre stations, en mode d'alimentation extérieure, puis en mode autonome.

Ensuite est décrit, dans une seconde partie, le fonctionnement du tramway lors d'un arrêt dans une station.

Première partie :
Le tramway 1 se déplace le long de rails de guidage. Dans des sections de son parcours, le tramway 1 roule tout en étant relié à une source d'alimentation électrique extérieure, qui fournit une tension continue de valeur sensiblement fixe (par exemple 750 V). Il capte cette énergie par exemple à l'aide d'un pantographe coopérant avec à une caténaire ou par un rail d'alimentation disposé sur le sol (non représentés).

Cette énergie est reçue par le dispositif commutateur Semb 5 qui la fournit, en totalité ou en partie, au moteur 4 et aux autres équipements du tramway consommateurs d'énergie.

Dans un mode de réalisation, une partie de cette énergie est fournie au système de stockage embarqué 7, sous la forme d'une tension continue V1, par exemple de 750 V.

Le hacheur embarqué Hemb 3 reçoit cette tension V1, l'adapte en fonction de l'état de charge du module à supercondensateur 2, puis fournit une tension continue V2 ainsi adaptée pour charger le module de supercondensateurs 2. L'adaptation est poursuivie au fur et à mesure de la charge.

Le moteur électrique 4 est réversible et adapté pour générer lors d'un freinage un couple de freinage fournissant de l'électricité. Le tramway 1 est adapté dans le cas considéré pour, lors d'une opération de freinage du tramway 1, récupérer l'énergie de freinage fournit par le moteur 4 et la transmettre, via le dispositif commutateur 5, soit partiellement, soit totalement au réseau extérieur par l'intermédiaire de la caténaire (pour éventuellement alimenter un autre tramway ou un élément de stockage extérieur) et/ou au système d'alimentation 7 pour recharge du module de super-condensateurs 2, de la même façon que décrite précédemment.

Par ailleurs, dans une ou plusieurs autres sections de son parcours, le tramway 1 n'est relié à aucune source d'alimentation électrique extérieure.

L'alimentation électrique du tramway est alors réalisée uniquement par le système de stockage embarqué 7, dans un mode d'alimentation électrique dit autonome.

Dans ce mode d'alimentation autonome, le module de super-condensateurs 2 se décharge et fournit une tension électrique continue V2 au hacheur Hemb 3. La tension V2 étant variable en fonction de l'état de charge du module de supercondensateurs 2, le hacheur Hemb 3 adapte cette tension reçue en entrée, et fournit au dispositif commutateur Semb 5 une tension continue V1 convenant aux équipements à bord du tramway 1 nécessitant une alimentation électrique, parmi lesquels le moteur de traction 4 et les équipements auxiliaires.

Lorsque le tramway freine sur un parcours en mode d'alimentation autonome, l'énergie de freinage peut être fournie au système de stockage embarqué 7 pour recharge comme décrit précédemment.

Seconde partie :
Le tramway 1 est par ailleurs, adapté pour s'arrêter en des lieux géographiques déterminés, appelées stations, pour permettre la montée et/ou la descente de voyageurs. La durée de ces arrêts est généralement comprise entre 20 et 40 secondes par exemple dans le cas considéré de 20 secondes.

En figure 1 est représentée une station 10 dans un mode de réalisation de l'invention.

Dans cette station 10 est présent un système d'alimentation fixe 13, comprenant un hacheur 11 raccordé à une source d'énergie Sstat 12 qui est par exemple le réseau électrique fixe fournissant une tension continue de 750 V.

Le hacheur 11 est adapté pour transférer pendant un arrêt du tramway en station, suffisamment d'énergie électrique pour charger partiellement ou totalement les moyens de stockage d'énergie électrique 2 ;

Dans le cas considéré, le convertisseur statique 11 comprend un hacheur Hstat, qu'on repérera par la suite par la référence 11.

A titre d'illustration, les caractéristiques du hacheur Hstat 11 sont par exemple : de 500 à 3000 kW en terme de puissance transférée et il occupe un volume de 2 à 5 mètres-cube.

Dans le cas considéré, le hacheur Hstat 11 est disposé au sol, sous la zone de stationnement du tramway à l'arrêt. Des moyens de mise en connexion électrique entre le hacheur Hstat 11 et le tramway 1 sont disposés au niveau du sol et une fois activés suite par exemple à la détection de la présence du tramway 1, permettent de relier électriquement le hacheur Hstat 11 et le module de supercondensateurs 2 embarqué.

Ainsi, une fois le tramway 1 arrêté en station 10 et cette mise en connexion électrique activée entre Hstat 11 et le module de supercondensateurs 2, le transfert d'énergie peut commencer : la source 12 fournit une énergie correspondant à la tension électrique Vstat au hacheur Hstat 11, qui adapte cette tension, en fonction de l'état de charge du module à supercondensateur 2, et délivre une tension continue V3 ainsi adaptée au module de supercondensateurs 2 pour le charger. L'adaptation est poursuivie au fur et à mesure de la charge

Par ailleurs, dans un mode de réalisation, le hacheur Hemb 3 embarqué est adapté pour surveiller l'état du module de supercondensateur 2 pendant cette charge en station et pour échanger des informations avec le Hstat 11. Dans un mode de réalisation, il détecte des dysfonctionnements, par exemple des phénomènes de surchauffe et/ou de charge défectueuse. II peut détecter l'état de charge du module de supercondensateurs 2 du système de stockage embarqué 7. Dans un mode de réalisation, l'adaptation de tension par le Hstat 11 est révisée en fonction de données fournies par le hacheur Hemb 3 et représentatives de l'état ainsi détecté par hacheur Hemb 3.

Dans un mode de réalisation, le hacheur Hemb 3 est adapté pour commander au hacheur en station Hstat 11 l'arrêt de la charge, par exemple lors de la détection d'un dysfonctionnement et/ou d'un état de charge complète du module de supercondensateurs 2.

Dans un autre mode de réalisation, la mise en contact électrique entre le hacheur Hstat 11 et le module de supercondensateurs 2 a lieu par exemple à l'aide d'un pantographe ou par tout autre moyen.

Dans un autre mode de réalisation, le hacheur n'est pas souterrain, mais disposé dans un local technique sur le sol, ou dans toute autre configuration.

Ainsi, le hacheur en station Hstat 11, lui, convient à un chargement compris dans une plage de puissance de 500 à 3000 kW par exemple dans le cas présent 750 kW. II permet ainsi de recharger complètement le module de supercondensateurs 2 pendant la durée limitée de l'arrêt, par exemple 20 secondes.

Le hacheur embarqué Hemb 3, de dimensions convenant à l'encombrement autorisé dans le tramway, permet d'adapter la tension pour le module de supercondensateurs 2, en dehors des chargements effectués en station 10 ou dans des stations similaires, pour préparer en marche une interstation en mode autonome. II convient à un chargement compris dans une plage de puissance de 200 à 500 kW, par exemple dans le cas présent 300 kW, ce qui est suffisant pour les chargements du module de supercondensateurs effectué lors du freinage ou en roulant. Dans un mode de réalisation, il exerce des fonctions de contrôle de l'état du module de supercondensateurs 2 et de pilotage de la charge, tant pendant une charge du module de supercondensateurs 2 effectuée à l'aide d'une tension transférée et adaptée par le hacheur Hemb 3 lui-même, que pendant une charge du module de supercondensateurs 2 effectuée à l'aide d'une tension transférée et adaptée par le hacheur Hstat 11 en station. Une telle disposition permet de mutualiser ces moyens de contrôle et de simplifier la configuration du hacheur en station.

L'invention a été décrite ci-dessus en considérant que les convertisseurs statiques 3 et 11 comprenaient des hacheurs, adaptés pour permettre le chargement d'un module de supercondensateurs 2.

Dans un autre mode de réalisation, le système de stockage d'énergie comprend (à la place ou en plus du module de supercondensateurs) une batterie électrochimique et les convertisseurs statiques 3 et 11 comprennent des convertisseurs de tension conçus pour adapter les sources d'énergie électrique Semb et Sstat à la batterie. Dans un mode de réalisation, le convertisseur statique 3 étant en outre adapté pour adapter, en mode d'alimentation autonome, l'énergie fournie par la batterie aux contraintes du moteur.

Dans un autre mode de réalisation, le système de stockage d'énergie comprend (à la place ou en plus du module de supercondensateurs et/ou de la batterie) un volant d'inertie et les convertisseurs statiques 3 et 11 comprennent des convertisseurs de tension conçus pour adapter les sources d'énergie électrique Semb et Sstat au volant d'inertie (transformation du courant continu en courant alternatif). Dans un mode de réalisation, le convertisseur statique 3 étant en outre adapté pour adapter, en mode d'alimentation autonome, l'énergie fournie par le volant d'inertie aux contraintes du moteur (transformation du courant alternatif en courant continu).

Dans un mode de réalisation, le convertisseur statique fixe, par exemple le hacheur, est réversible et est adapté pour recevoir de l'énergie fournie par le système de stockage d'énergie embarqué dans le véhicule.

Cette disposition est particulièrement utile dans le cas où le système de stockage d'énergie embarqué aurait accumulé une quantité d'énergie trop importante pour pouvoir de nouveau récupérer l'énergie de l'interstation suivante, par exemple après de très fortes descentes. Cette énergie transférée par le hacheur en provenance du système de stockage d'énergie embarquée est alors par exemple fournie au réseau extérieur continu via une sous-station réversible ou stockée dans un système au sol approprié.

## Revendications

1. Procédé d'alimentation électrique d'un véhicule ferroviaire (1) comprenant un système de stockage d'énergie embarqué (7), **caractérisé en ce que** :
- un convertisseur statique d'énergie fixe (11), localisé au niveau d'une station d'arrêt (10) du véhicule, reçoit de l'énergie électrique ;
- le véhicule ferroviaire étant arrêté en station, un transfert d'énergie à destination du système de stockage d'énergie embarqué (7) est réalisé par le convertisseur statique fixe (11) à partir de ladite énergie électrique reçue, ledit convertisseur statique fixe adaptant la tension fournie (V3) au système de stockage d'énergie embarqué en fonction de l'état de charge dudit système de stockage d'énergie embarqué ;
- le système de stockage d'énergie embarqué (7) se charge en fonction de l'énergie transférée sous la tension (V3) adaptée par le convertisseur statique fixe.

2. Procédé d'alimentation selon la revendication 1, selon lequel le système de stockage d'énergie embarqué (7) comprend un convertisseur statique d'énergie embarqué (3) et un module de stockage d'énergie (2),
le convertisseur statique d'énergie embarqué (3) étant adapté pour transférer de l'énergie au module de stockage d'énergie (2) en adaptant la tension (V2) fournie au module de stockage d'énergie en fonction de l'état de charge dudit module de stockage d'énergie,
selon lequel le convertisseur statique d'énergie fixe (11) et le convertisseur statique d'énergie embarqué (3) coopèrent lors d'un transfert d'énergie par le convertisseur statique fixe à destination du système de stockage d'énergie embarqué.

3. Procédé d'alimentation selon la revendication 1 ou 2, selon lequel, lors d'un transfert d'énergie par le convertisseur statique fixe (11) à destination du système de stockage d'énergie embarqué (7), le convertisseur statique d'énergie embarqué surveille l'état du module de stockage d'énergie, et pilote le fonctionnement du convertisseur statique fixe en fonction dudit état surveillé.

4. Procédé d'alimentation selon l'une quelconque des revendications précédentes, selon lequel:
- le convertisseur statique fixe (11) a pour caractéristique de puissance transférée une valeur comprise entre 500 et 3000 kW ;
- le convertisseur statique d'énergie embarqué (3) a pour caractéristique de puissance transférée une valeur comprise entre 300 et 500 kW.

5. Procédé d'alimentation selon l'une quelconque des revendications précédentes, selon lequel le convertisseur statique fixe (11) et le convertisseur statique d'énergie embarqué (3) comprennent des hacheurs, et selon lequel le module de stockage d'énergie comprend des supercondensateurs.

6. Système d'alimentation (13) en station destiné à alimenter un véhicule ferroviaire (1) comprenant un système de stockage d'énergie embarqué (7), ledit système d'alimentation en station comprenant un convertisseur statique d'énergie fixe (11), localisé au niveau d'une station d'arrêt du véhicule, adapté pour recevoir de l'énergie électrique et pour transférer ladite énergie au système de stockage d'énergie embarqué (7) lors d'un arrêt du véhicule ferroviaire à ladite station, ledit convertisseur statique fixe (11) adaptant la tension (V3) fournie au système de stockage d'énergie embarqué (7) en fonction de l'état de charge dudit système de stockage d'énergie embarqué.

7. Système d'alimentation (13) en station selon la revendication 6, dans lequel le convertisseur statique fixe (11) est adapté pour coopérer, lors dudit transfert, avec un convertisseur statique d'énergie embarqué (3) du système de stockage d'énergie embarqué dans le véhicule, ledit convertisseur statique d'énergie embarqué étant destiné à transférer de l'énergie à un module de stockage d'énergie (2) du système de stockage d'énergie embarqué (7) en adaptant la tension (V2) fournie au module de stockage d'énergie en fonction de l'état de charge dudit module de stockage d'énergie.

8. Système d'alimentation (13) en station selon la revendication 6 ou 7, dans lequel, lors dudit transfert, le fonctionnement du convertisseur statique fixe (11) est adapté en fonction de données de pilotage fournies par le convertisseur statique d'énergie embarqué (3).

9. Système d'alimentation (13) en station selon l'une quelconque des revendications précédentes 6 à 8, dans lequel :
- le convertisseur statique fixe (11) a pour caractéristique de puissance une valeur comprise entre 500 et 3000 kW.

10. Système d'alimentation (13) en station selon l'une quelconque des revendications précédentes 6 à 9, selon lequel le convertisseur statique fixe (11) comprend un hacheur.

11. Système d'alimentation (13) en station selon l'une quelconque des revendications précédentes 6 à 10, dans lequel le convertisseur statique fixe est réversible et est adapté pour recevoir de l'énergie fournie par le système de stockage d'énergie embarqué dans le véhicule.

12. Système de stockage d'énergie embarqué (7) d'un véhicule ferroviaire (1), comprenant un convertisseur statique d'énergie embarqué (3) et un module de stockage d'énergie (2),
le convertisseur statique d'énergie embarqué (3) étant adapté pour transférer de l'énergie au module de stockage d'énergie en adaptant la tension (V2) fournie au module de stockage d'énergie (2) en fonction de l'état de charge dudit module de stockage d'énergie,
dans lequel le convertisseur statique d'énergie embarqué (3) est adapté pour coopérer avec un convertisseur statique d'énergie fixe (11) localisé au niveau d'une station d'arrêt du véhicule, lors d'un transfert d'énergie effectué par le convertisseur statique fixe (11) à destination du module de stockage d'énergie embarqué (2), le système de stockage d'énergie embarqué (2) se chargeant en fonction de l'énergie transférée sous une tension (V3) adaptée par le convertisseur statique fixe.

13. Système de stockage d'énergie embarqué (7) selon la revendication 12, dans lequel, lors d'un transfert d'énergie par le convertisseur statique fixe (11) à destination du module de stockage d'énergie embarqué (2), le convertisseur statique d'énergie embarqué (3) est adapté pour surveiller l'état du module de stockage d'énergie, et piloter le fonctionnement du convertisseur statique fixe en fonction dudit état surveillé.

14. Système de stockage d'énergie embarqué (7) selon la revendication 12 ou 13, dans lequel :
- le convertisseur statique d'énergie embarqué (3) a pour caractéristique de puissance une valeur comprise entre 300 et 500 kW.

15. Système de stockage d'énergie embarqué (7) selon l'une quelconque des revendications 12 à 14, dans lequel le convertisseur statique d'énergie embarqué (3) comprend un hacheur, et le module de stockage d'énergie (2) comprend des supercondensateurs.

16. Véhicule ferroviaire (1) comprenant un système de stockage d'énergie embarqué (7) selon l'une quelconque des revendications 12 à 15.
